**Europäisches Patentamt**

**European Patent Office**

**Office européen des brevets**

(19)

(11) Numéro de publication: **0 040 561**
**B1**

(12) FASCICULE DE BREVET EUROPEEN

(45) Date de publication du fascicule du brevet:
**11.09.85**

(21) Numéro de dépôt: **81400730.8**

(22) Date de dépôt: **08.05.81**

(51) Int. Cl.⁴: **G 06 K 19/08,** G 06 K 1/12,
G 06 K 19/02

(54) Elément de mémoire magnétique thermodestructible.

(30) Priorité: **21.05.80 FR 8011320**

(43) Date de publication de la demande:
**25.11.81 Bulletin 81/47**

(45) Mention de la délivrance du brevet:
**11.09.85 Bulletin 85/37**

(84) Etats contractants désignés:
**AT BE CH DE GB IT LI LU NL SE**

(56) Documents cités:
**FR - A - 2 310 599**
**FR - A - 2 375 691**
**US - A - 4 108 367**

(73) Titulaire: **CROUZET, 128, Avenue de la République,
F-75011 Paris (FR)**

(72) Inventeur: **Battarel, Claude, La Chaumière,
F-06520 Magagnosc (FR)**
Inventeur: **Morille, Robert, 2138 chemin de Malevan,
F-06570 Saint-Paul-de-Vence (FR)**
Inventeur: **Bedene, Brigitte, 39 avenue Florès,
F-06000 Nice (FR)**

(74) Mandataire: **Bloch, Robert et al, 39 avenue de Friedland,
F-75008 Paris (FR)**

**Description**

La présente invention concerne un élément de mémoire magnétique, comprenant un support et au moins une couche ferromagnétique contenant au moins une information.

On connaît déjà les tickets ou cartes servant de supports à des zones ferromagnétiques déposées ou collées à leur surface, et dont la magnétisation constitue l'information associée à ces supports. Il s'agit par exemple, de tickets, ou titres, de transport et de carte de crédit. Les zones d'information en question sont formées par des dépôts de ferrite, du type encre magnétique, à aimantation discontinue engendrée par une tête d'écriture. L'aimantation discontinue des zones d'information peut se traduire par une aimantation dans un sens dans une zone et une aimantation dans l'autre sens dans une autre zone adjacente, ces deux aimantations en sens opposés créant une transition magnétique constituant un bit d'information. Cette aimantation discontinue peut également se traduire par une aimantation quelconque dans des zones ferromagnétiques cette fois espacées, définissant des dipôles magnétiques. Les informations magnétiques sont destinées à être exploitées, dans un lecteur magnétique, par une tête de lecture et une bobine d'effacement.

Compte tenu de la généralisation de l'enregistrement magnétique sous toutes ses formes, de tels supports d'informations, ou éléments de mémoire magnétique, ne sont plus à l'abri de fraudes, puisqu'il est possible de lire les informations d'un support valide et de les reproduire sur un support périmé pour le valider à nouveau.

Pour pallier cet inconvénient, il a déjà été proposé, dans le document FR-A-2 310 599, un élément dans le support duquel l'information magnétique peut être perdue par désorganisation mécanique sous l'action de la chaleur au moyen d'une substance thermosensible, c'est-à-dire par destruction de la couche magnétique elle-même.

Mais ce document n'enseigne pas la façon d'empêcher la fraude selon laquelle on reproduirait, sans support valide, n'importe quelle information sur un support périmé, par exemple par un champ extérieur.

La présente invention vise à pallier ce dernier inconvénient.

A cet effet, elle concerne un élément du type mentionné ci-dessus, caractérisé par le fait qu'il comprend au moins une couche d'un diffusant non magnétique, en contact avec la couche ferromagnétique, pour détruire de façon irréversible le ferromagnétisme de la couche ferromagnétique sous l'action de la chaleur.

Grâce à la destruction irréversible du ferromagnétisme de la couche ferromagnétique, notamment pour l'effacement de l'information de l'élément mémoire de l'invention, cette couche peut devenir inutilisable avec la disparition de l'information, sans plus jamais pouvoir être utilisée par les fraudeurs. Dans le cas où la couche ferromagnétique contient plusieurs informations, celles-ci peuvent de la même manière disparaître une à une, sans plus jamais pouvoir être reproduites.

Le phénomène de destruction du magnétisme d'une couche ferromagnétique par un diffusant s'explique de la manière suivante.

Le contact de deux matériaux provoque la migration, et donc la diffusion, des atomes de l'un dans l'autre et inversement. La vitesse de diffusion des atomes d'un diffusant est toute-fois beaucoup plus grande que celle des atomes d'un autre matériau.

Dans la bande d'énergie 3d des corps ferromagnétiques, il y a un nombre d'électrons à spin orienté dans un sens différent du nombre d'électrons à spin orienté dans l'autre sens. C'est le ferromagnétisme. Les électrons des atomes d'un diffusant remplissent partiellement ce niveau et rétablissent l'équilibre de spin, détruisant ainsi partiellement le ferromagnétisme. Cette destruction du ferromagnétisme s'effectue naturellement de façon statistique, étant entendu qu'au niveau d'un seul atome du matériau ferromagnétique, il reste, après diffusion, soit ferromagnétique, soit non ferromagnétique.

Pus un diffusant possède d'électrons périphériques à un certain niveau d'énergie, plus il est efficace.

Comme diffusant, on peut considérer l'indium ou le bismuth, qui sont des métaux purs. Toutefois, il ne s'agit pas d'une limitation de l'invention, et un métalloïde ou même un tout autre corps pourrait également convenir, à condition qu'il ne soit pas ferromagnétique. Cependant, plus le point de fusion du diffusant est bas, plus sont pouvoir de diffusion est élevé. A cet égard, le point de fusion de l'indium se situe à 156° C.

Dans ce dernier cas, il est avantageux que la couche ferromagnétique soit une couche mince.

En effet, comme, dans la pratique, on est limité en température, le temps nécessaire pour détruire le ferromagnétisme de la couche ferromagnetique par élévation de la température est d'autant plus court que l'épaisseur de la couche ferromagnétique est faible.

Il faut, en outre, noter ici qu'on a constaté que ce magnétisme à une température donnée, se dégradait dans le temps d'une manière régulière et déterminable. Il est donc possible, pour chaque température, de déterminer le temps nécessaire pour atteindre cette dégradation et par conséquent de connaître la durée de vie de l'élément mémoire de l'invention, à la température ambiante.

Par ailleurs, il est intéressant que la limite de solubilité du diffusant dans le matériau ferromagnétique ne soit atteinte qu'après la destruction du magnétisme. Mais soulignons qu'il ne s'agit que d'une forme de réalisation préférée.

On a vu plus haut que la vitesse de destruction du magnétisme, sous l'action de la chaleur, était d'autant plus grande que la couche ferromagnétique était mince. Or le niveau du signal de lecture d'un élément de mémoire magnétique, recueilli par une tête de lecture, est fonction du flux coupé, qui, lui, est d'autant plus important que la couche ferromagnétique est épaisse. C'est pourquoi, dans une forme de réalisation particulièrement préférée de l'invention, l'élément mémoire comporte plusieurs couches ferromagnétiques minces et plusieurs couches de diffusant intercalées les unes entre les autres, respectivement.

Grâce à cet agencement en multicouche, on réunit l'avantage des couches ferromagnétiques minces, quant à la vitesse de diffusion, et celui des couches ferromagnétiques épaisses, quant au niveau du signal de lecture.

Enfin les couches ferromagnétiques de l'élément mémoire de l'invention peuvent être continues ou, de préférence, discontinues. Lorsqu'elles sont continues, les transitions magnétiques engendrées par les destructions magnétiques, et qui constituent les informations, sont étalées et les signaux de lecture enregistrés en dynamique, c'est-à-dire lorsque la lecture s'effectue lors du défilement de l'élément mémoire, sont plus faibles. Toutefois, lors d'une lecture statique, c'est-à-dire par exemple à l'aide d'une magnétorésistance, cet inconvénient est atténué. Lorsque les couches ferromagnétiques sont discontinues, les transitions magnétiques sont toujours abruptes.

L'invention sera mieux comprise à l'aide de la description suivante d'une forme de réalisation préférée de l'élément mémoire magnétique thermodestructible de l'invention, en référence au dessin annexé, sur lequel:

La figure 1 représente une vue en prespective de dessus de l'élément mémoire de l'invention, et

la figure 2 représente une vue en coupe longitudinale partielle, à beaucoup plus grande échelle, de l'élément de la figure 1.

L'élément représenté sur le dessin comporte un support 1, rigide ou semi-rigide, et une série de dépôts 2 de portions de couches ferromagnétiques alternées avec des portions de couches diffusantes en contact intime avec les couches ferromagnétiques.

Dans l'exemple représenté, le support 1 a été découpé dans une feuille de polyimide. Les dimensions peuvent correspondre à celles d'un ticket de transport, d'un titre de paiement pour téléphone public, ou d'une carte de crédit. Ce support est revêtu d'une couche de cuivre 3, destinée à faciliter l'accrochage des dépôts 2.

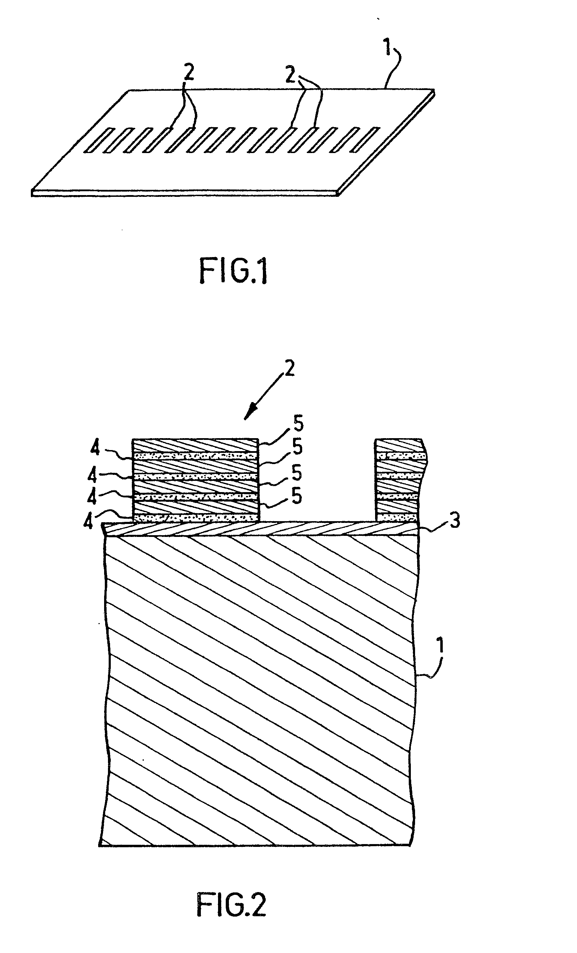

Les dépôts 2, effectués par exemple par évaporation sous vide, dépôt chimique sans courant ou électrolytique sont disposés transversalement sur le support 1, avec interposition de la couche de cuivre 3, et ils sont régulièrement espacés. Une centaine de dépôts 2 peuvent ainsi être prévus dans la longueur du support, avec une définition de un ou deux dépôts par mm. Chaque dépôts 2 comporte, les unes sur les autres, plusieurs couches ferromagnétiques minces 4 et plusieurs couches diffusantes 5 intercalées les unes entre les autres, respectivement. Dans le cas représenté, les dépôts 2 comportent quatre de chacune de ces couches. La couche de cuivre 3 peut indifféremment recevoir une couche ferromagnétique 4 (figure 2) ou une couche diffusante. Toutes les portions de couche d'un même niveau de tous les dépôts 2 forment une couche, ferromagnétique ou diffusante, discontinue.

Les couches ferromagnétiques 4 peuvent être formées en alliage ferromagnétique contenant du nickel et du cobalt en proportions égales. Dans l'exemple considéré, chacune de ces couches a une épaisseur de 0,05 $\mu$m.

Les couches diffusantes peuvent être formées en indium, avec une épaisseur de 0,1 $\mu$m, constituant une bonne source de diffusion.

L'épaisseur magnétisable des dépôts 2 atteint donc 0,2 $\mu$m appropriée pour obtenir un bon niveau de signal de lecture, l'agencement en multicouches alternées des matériaux ferromagnétique et diffusant permettant, simultanément, une bonne diffusion.

L'élément de mémoire magnétique thermodestructible décrit ci-dessus constitue un support d'informations pouvant avoir une durée de vie de l'ordre de 10 000 heures, les bits d'information, constitués par les dépôts 2, pouvant, un à un et lors du défilement de l'élément dans un appareil de lecture, être effacés, de façon irréversible, par des moyens thermiques, tels que résistance chauffante, radiations, induction haute fréquence, courants de Foucault ou effet Joule. Il s'agit d'un support infraudable par recopie, puisque les dépôts 2 ne sont plus utilisables après un effacement thermique, à cause de la destruction irréversible du ferromagnétisme des couches 4 correspondantes.

L'exploitation de l'élément mémoire décrit ci-dessus peut s'effectuer de la façon suivante.

On introduit tout d'abord l'élément entre deux aimants disposés tête-bêche en amont d'une tête de lecture d'un lecteur dynamique, pour forcer dans le même sens les aimantations de toutes les portions de couches ferromagnétiques 4 qui ont été au préalable aimantées. On lit, ou on détermine, ensuite le position du premier dépôt, ou bit, 2 à effacer, on l'efface sous l'action d'une température, par exemple de l'ordre de 300°C, puis on relit. Si au cours de cette dernière lecture, on constate que ce premier bit n'a pas en fait été effacé, on en déduit qu'il s'agit d'un titre à informations non thermodestructibles, et donc d'une fraude. L'avantage d'orienter toutes les aimantation dans le même sens réside dans le fait que dans le cas d'un support ordinaire, à couches ferromagnétiques continues et non thermodestructibles, il ne subsiste plus après aucune transition magnétique et donc plus aucune information. Avec un support à couches ferromagnétiques continues mais thermodestructibles, dans lequelles on a procédé à des prédestructions magnétiques locales avant toute exploitation, l'exploitation en créant d'autres de toutes manières, il existe toujours des transitions magnétiques, et donc des bits d'informations, lisibles.

Une fois qu'on a procédé à la vérification de la validité du support, on efface par voie thermique le nombre de bits 2 correspondant au crédit consommé.

Afin de réduire l'usure mécanique due aux frottements de la tête de lecture, on peut avantageusement revêtir l'élément mémoire de l'invention d'un vernis silicone ou d'une mince couche de téflon, permettant ainsi de favoriser le glissement sur la tête de lecture et résistant à la température d'effacement, ou de destruction de magnétisme.

## Revendications

1. Elément de mémoire magnétique, comprenant un support (1) et au moins une couche ferromagnétique (4) contenant au moins une information, caractérisé par le fait qu'il comprend au moins une couche (5) d'un diffusant non magnétique, en contact avec la couche ferromagnétique (4), pour détruire de façon irréversible le ferromagnétisme de la couche ferromagnétique (4) sous l'action de la chaleur.

2. Elément selon la revendication 1, dans lequel la couche ferromagnétique (4) est mince.

3. Elément selon l'une des revendications 1 et 2, dans lequel la limite de solubilité du diffusant dans la couche ferromagnétique n'est atteinte qu'après la destruction du ferromagnétisme.

4. Elément selon l'une des revendications 2 et 3, dans lequel sont prévues plusieurs couches ferromagnétiques minces et plusieurs couches de diffusant intercalées les unes entre les autres, respectivement.

5. Elément selon l'une des revendications 1 à 4, dans lequel les couches ferromagnétiques sont continues.

6. Elément selon l'une des revendications 1 à 4, dans lequel les couches ferromagnétiques sont discontinues.

## Patentansprüche

1. Magnetisches Speicherelement mit einem Träger (1) und wenigstens einer ferromagnetischen Schicht (4) enthaltend wenigstens eine Information, dadurch gekennzeichnet, daß es wenigstens eine Schicht (5) aus einem unmagnetischen Diffusionsmaterial enthält, die mit der ferromagnetischen Schicht (4) in Kontakt steht um, unter Einwirkung von Wärme, den Ferromagnetismus der ferromagnetischen Schicht (4) irreversibel zu zerstören.

2. Element nach Anspruch 1, bei welchem die ferromagnetische Schicht (4) dünn ausgebildet ist.

3. Element nach einem der Ansprüche 1 und 2, bei welchem die Grenze der Löslichkeit des Diffusionsmateriales in der ferromagnetischen Schicht erst nach der Zerstörung des Ferromagnetismus erreicht ist.

4. Element nach einem der Ansprüche 2 und 3, bei welchem mehrere dünne ferromagnetische Schichten und mehrere Schichten aus Diffusionsmaterial vorgesehen sind, wobei die einen mit den anderen Schichten jeweils verschachtelt sind.

5. Element nach einem der Ansprüche 1 bis 4, bei welchem die ferromagnetischen Schichten kontinuierlich sind.

6. Element nach einem der Ansprüche 1 bis 4, bei welchem die ferromagnetischen Schichten diskontinuierlich sind.

## Claims

1. Magnetic memory element comprising a support (1) and at least one ferromagnetic layer (4) containing at least one information, characterized in that it comprises at least one layer (5) of a non-magnetic diffuser, in contact with the ferromagnetic layer (4) to irreversibly destroy the ferromagnetism of the ferromagnetic layer (4) under the action of heat.

2. Element of Claim 1, wherein the ferromagnetic layer (4) is a thin layer.

3. Element of one of Claims 1 and 2, wherein the limit of solubility of the diffuser in the ferromagnetic layer is obtained only after destruction of the ferromagnetism.

4. Element of one of Claims 2 and 3, wherein a plurality of thin ferromagnetic layers and a plurality of diffuser layers are provided, which are alternatingly superposed, respectively.

5. Element of one of Claims 1 to 4, wherein the ferromagnetic layers are continuous.

6. Element of one of Claims 1 to 4, wherein the ferromagnetic layers are discontinuous.

FIG.1

FIG.2